# EUROPEAN PATENT APPLICATION

(11) **EP 4 561 007 A2**
(43) Date of publication of application: **28.05.2025**
(21) Application number: 25170178.5
(22) Date of filing: 10.02.2023
(51) Int. Cl.: H04L 43/087

(54) **PERFORMANCE ISSUE MONITORING**

(30) Priority: 10.03.2022 GB 202203370
(62) Divisional of application: 23704779.0
(71) Applicant: British Telecommunications Public Limited Company, London E1 8EE (GB)
(72) Inventor: BULL, Nicola, 9th Floor, One Braham, Braham Street, London, E1 8EE (GB)
(74) Representative: British Telecommunications public limited company Intellectual Property Department

(57) **Abstract**

A method for monitoring a network, the method comprising: determining whether there is a performance issue in respect of the first network connection; and in response to determining that there is a performance issue in respect of the first network connection, triggering a monitoring process to determine whether there is a performance issue in respect of other network connections connecting to a set of other CPEs, in respective other LANs, so as to define a cluster of CPEs exhibiting performance issues in respect of their network connections, the cluster being for identifying a candidate cause of the performance issue in respect of the first network connection; wherein the monitoring process comprises: identifying, by the CPE, the set of other CPEs; instructing, by the CPE, each of the other CPEs to determine whether there is a performance issue in respect of each other CPE's respective network connection; receiving, at the CPE, results of the determination from each of the other CPEs, the results being for defining the cluster of CPEs exhibiting performance issues in respect of their network connections.

## Description

### TECHNICAL FIELD

This invention relates to network monitoring during Voice-over-IP (VoIP) calls or other such streaming over a network connection. In particular, methods and systems for monitoring performance issues in respect of streamed communication over a network is considered.

### BACKGROUND

VoIP is a real-time IP layer service and the quality of a VoIP call is determined by a number of factors such as IP packet loss and variations in arrival time of packets known as jitter. There are a variety of techniques for computing a representation of the perceived quality of the call known as the Mean Opinion Score (MOS). VoIP applications will typically measure key parameters such as packet loss and jitter and compute a MOS during the call and may use the results to mitigate performance issues (e.g. using packet loss concealment) and report on the call quality. Some services may request a post call rating of quality from the user while others may provide some form of real time indication of the current quality of the call. There are a number of potential causes of IP packet loss and jitter e.g. IP network congestion, WiFi connectivity or the quality of the broadband connection.

The majority of the UK broadband access network uses a variant of DSL technology e.g. ADSL or VDSL. The ADSL service runs over the access network between a telephone exchange and customer premise, the VDSL service, also known as Fibre to the Cabinet (FTTC) passes the VDSL signal between the street cabinet and the customer premise. The performance of the DSL network can be susceptible to conditions such as radio interference and poor line connectivity. These conditions can result in brief or longer periods of line errors at the DSL layer which in turn can cause packet loss and jitter at the IP service layer. The DSL link can be a cause of broadband performance problems and therefore a customer report of problems with IP telephony may be due to a broadband fault.

### SUMMARY OF INVENTION

Little or no work has been found that directly relates the relationship between performance issues at the DSL network layer with the performance of the IP network layer. Published work on real-time services such as VoIP tends to focus on techniques to mitigate issues such as packet loss and jitter at the IP layer rather than the underlying cause of the IP layer performance problems. Similarly work on performance problems with DSL, notably, the impact of impulse noise and other radio frequency interferers tends to look at techniques to mitigate the effects. The invention addresses this by providing methods and systems that, rather than simply addressing the symptoms of an issue, investigate and identify the root cause that underlies the performance issue.

The invention is defined in the independent claims. Embodiments of the invention are set out in the dependent claims.

According to a first aspect, a method for monitoring a network is provided. The method comprises determining whether there is a performance issue in respect of streamed communication carried via a first network connection between a first customer premise equipment, CPE, in a local area network, LAN, and one or more remote entities outside the LAN, wherein the determination is based on data from the streamed communication. In response to determining that there is a performance issue in respect of the streamed communication carried via the first network connection, it is determined whether there is a performance issue in respect of the first network connection. In response to determining that there is a performance issue in respect of the first network connection, a monitoring process is triggered to determine whether there is a performance issue in respect of other network connections connecting to a set of other CPEs, in respective other LANs, so as to define a cluster of CPEs exhibiting performance issues in respect of their network connections, the cluster being for identifying a candidate cause of the performance issue in respect of the streamed communication. The monitoring process comprises identifying, by the CPE, the set of other CPEs; instructing, by the CPE, each of the other CPEs to determine whether there is a performance issue in respect of each other CPE's respective network connection; and receiving, at the CPE, results of the determination from each of the other CPEs, the results being for defining the cluster of CPEs exhibiting performance issues in respect of their network connections.

The candidate cause may be network equipment causative of the performance conditions/issues in respect of the first and one or more of the other network connections. Possible causes of performance issues are, among others, line errors caused by an intermittent physical connection, e.g. a copper line fault, and intermittent radio interference ingress into the DSL connection that can be exacerbated by a line imbalance, e.g., radio interference from an electrical source, like a faulty power supply. The set of other CPEs may be a set of geographically-proximate and/or electrically-proximate CPEs. The first CPE may be an end-point of the first network connection and the streamed communication carried via the first network connection. The first CPE may be an end-point of the first network connection, and wherein a separate user device in communication therewith within the first Local Area Network may be an endpoint within the first Local Area Network of the streamed communication carried via the first network connection. In the former case, the CPE may be a user device, such as a VoIP handset. In the latter case, the CPE may be a gateway device (e.g. a DSL gateway device), such as a modem gateway/router.

By coupling diagnostics at the service layer - the streamed communication (e.g. a VoIP session) - to diagnostics at the network layer - the network connections (e.g. a DSL connection) - an underlying issue or fault at the network layer (i.e. a DSL fault), one that may be affecting performance of many CPEs, can be identified via the detection of a performance issue at the service layer of a single CPE (i.e. poor performance of a VoIP session held by the CPE). Further, the concept of neighbour clustering is introduced. This capability would enhance customer service quality and capability to detect common cause fault cases. For example, a fault affecting a cluster of CPEs can be identified and addressed before any performance issues are experienced at the service layer by the majority of the CPEs in the cluster - indeed, only one CPE may experience the service level performance issue, and that can be detected by the method and used to resolve the fault for all CPEs affected by the fault.

In one example, determining whether there is a performance issue in respect of the streamed communication comprises monitoring one or more parameters of the data from the streamed communication, and determining whether any one of the one or more parameters indicate a performance issue. Determining whether a parameter of the one or more parameters of the data from the streamed communication indicates a performance issue may comprise comparing the value of the parameter to a respective threshold, wherein, if the value meets its respective threshold, the value indicates a performance issue. If the value indicates a performance issue, the method may further comprise determining that there is a performance issue based on the value. The one or more parameters may comprise one or more of a packet loss, a jitter value and a Mean Opinion Score (MOS). The thresholds may be set based on pre-determined values that indicate acceptable performance. Alternatively, the thresholds may be based on targets suggested by the internet service provider ISP, or by a particular Standard. For example, ITU-T G.114 recommend that latency of 150ms one way should be the maximum value for a VoIP call. One way latency of >250ms will be noticeable to an end user. Cisco state that round trip delay should not exceed 300ms and one way jitter should be <30ms for VoIP. The VoIP codec used will vary the amount of packet loss that can be handled via packet loss concealment techniques. It would be ideal for packet loss to be 0%, however this is unrealistic and therefore its considered best to have <1% loss. A MOS <4 can indicate a poorer performing call. Of course it will be appreciated that any recommended threshold value may be updated/changed by the ISP based on the use case.

By monitoring one or more parameters of the data from the streamed communication a performance issue can be determined from the streamed communication itself. This determination can then be used to commence a diagnostic process on the network - e.g. the DSL - layer, which improves efficiency, as network layer monitoring does not need to be operating continuously. Rather, the network layer diagnostics are only run if a performance issue is determined at the communication layer - e.g. in a VoIP session.

Determining whether there is a performance issue in respect of the first network connection may comprise monitoring one or more network performance parameters of the first network, and determining whether any one of the one or more network performance parameters indicate a performance issue. Determining whether a network performance parameter indicates a performance issue may comprise comparing the value of the network performance parameter to a respective threshold, wherein, if the value meets its respective threshold, the value indicates a performance issue. If the value indicates a performance issue, the method may further comprise determining that there is a performance issue based on the value. DSL metrics/performance parameters to determine performance include: Errored Seconds (ES), Severely Errored Seconds (SES), Cyclic Redundancy Check (CRC), Code Violations (CV), Forward Error Correction (FEC). The thresholds may be set based on pre-determined values that indicate acceptable performance. Alternatively, the thresholds may be based on targets suggested by the internet service provider ISP of determined by the CPE or the overall diagnostic system more generally.

If a performance issue in respect of the first network is detected after a performance issue in respect of the streamed communication has been detected, it allows an insight and a further investigation into the possible causes of the issue in the streamed communication, improving diagnostic capability.

Optionally, the method may further comprise transmitting data in relation to the cluster to a network control component for identifying a candidate cause of the performance issue in respect of the streamed communication. The method may further comprise each CPE of the cluster transmitting its own data directly to the network control, or each CPE of the cluster transmitting its own data to the first CPE with the first CPE then transmitting the data from each CPE of the cluster to the network control. The transmitted data may include a DSL rating for the first CPE based on one or more of ES, SES, CRC, CV, FEC values collected by the first CPE, and may further include a DSL rating for each CPE in the cluster based on one or more of ES, SES, CRC, CV, FEC values collected by each CPE. Here, a DSL rating for a CPE may be based on an aggregated value of any one of ES, SES, CRC, CV, FEC values collected by the CPE during the streamed communication.

In another example, the method further comprises continuing to monitor the one or more parameters and/or the one or more network performance parameters until the end of the streamed communication (e.g. the end of the VoIP session).

In this case, continuous monitoring can improve data collection and the resolution of performance issue identification.

The monitoring process comprises identifying, by the CPE, the set of other CPEs; instructing, by the CPE, each of the other CPEs to determine whether there is a performance issue in respect of each other CPE's respective network connection; and receiving, at the CPE, results of the determination from each of the other CPEs, the results being for defining the cluster of CPEs exhibiting performance issues in respect of their network connections.

The identification, by the CPE for which the performance issue in the streamed communication, of the set of other CPEs provides a decentralised method in which each CPE can autonomously collect the data required to identify a network connection fault that is affecting a cluster of CPEs. No coordination by a centralised system is necessary for this data collection, which may improve overall diagnostic performance and system robustness.

Identifying the set of other CPEs may comprise: identifying other CPEs immediately neighbouring the CPE and determining whether the number of identified CPEs reaches a minimum number of other CPEs. If the number of identified CPEs reaches a minimum number of other CPEs, the number of identified CPEs may be determined to be the set of other CPEs. If the number of identified CPEs does not reach a minimum number of other CPEs, each identified CPE may be instructed to identify any further CPE that is immediately neighbouring to the identified CPE, wherein the identified CPEs and the further identified CPEs are included in the set of other CPEs. Additional CPEs may be identified until the minimum number of other CPEs is reached, each additional CPE being an immediate neighbour of a previously identified CPE.

Here the further CPEs are CPEs not previously identified, so that repeat identification of the same CPE is avoided. Further, immediately neighbouring may mean an immediate spatial neighbour (those CPEs located closest to the CPE in physical space) or an immediate electrical neighbour (those CPEs all connected to a common node on the network). The identification can include spatial and/or electrical neighbours depending on the use case. In this way, a single CPE can identify a cluster by identifying nearest neighbour CPEs. Then, if the number of nearest neighbours is not sufficient (for example, for the collection of enough data to accurately identify the fault), the CPE can expand the cluster to include the nearest neighbours of the originally identified CPEs. This circle of CPEs can be iteratively expanded by including CPEs that are consecutively further and further away from the original CPE until a sufficient number of CPEs are identified. This each single CPE to autonomously identify clusters of CPEs all being affected by a common fault without the need for a centralised system.

Alternatively, the monitoring of the performance condition in respect of respective other network connections may be triggered by the first CPE communicating with a network control component remote from the first CPE, and by the network control component communicating with the set of other CPEs whereby to trigger the monitoring of the performance condition in respect of the other network connections.

Optionally, the streamed communication is a Voice over IP session and/or the first network connection is a Digital Subscriber Line and/or the other network connections are Digital Subscriber Lines.

This makes use of real-time monitoring of VoIP service traffic to trigger high resolution DSL diagnostics. Rather than concentrating on simply ameliorating performance issues at the VoIP layer, the method investigates the underlying cause, one that may be affecting a cluster of CPEs. Further, by only triggering DSL diagnostics when a VoIP issue is detected, DSL monitoring is streamlined towards a detection process that is only triggered when an underlying DSL fault starts affecting VoIP performance - i.e. starts directly degrading a user's experience.

According to a second aspect, a method for monitoring a network is provided, the method comprising: determining whether there is a performance issue in respect of the first network connection; and in response to determining that there is a performance issue in respect of the first network connection, triggering a monitoring process to determine whether there is a performance issue in respect of other network connections connecting to a set of other CPEs, in respective other LANs, so as to define a cluster of CPEs exhibiting performance issues in respect of their network connections, the cluster being for identifying a candidate cause of the performance issue in respect of the streamed communication. Determining whether there is a performance issue in respect of the first network connection may comprise monitoring one or more network performance parameters of the first network; and determining whether any one of the one or more network performance parameters indicate a performance issue. Determining whether a network performance parameter indicates a performance issue may comprise comparing the value of the network performance parameter to a respective threshold, wherein, if the value meets its respective threshold, the value indicates a performance issue. Determining whether a network performance parameter indicates a performance issue may comprise comparing the value of the network performance parameter to a respective threshold, wherein, if the value meets its respective threshold, the value indicates a performance issue. If the value indicates a performance issue, the method may further comprise determining that there is a performance issue based on the value. DSL metrics/performance parameters to determine performance include: Errored Seconds (ES), Severely Errored Seconds (SES), Cyclic Redundancy Check (CRC), Code Violations (CV), Forward Error Correction (FEC). The thresholds may be set based on pre-determined values that indicate acceptable performance. Alternatively, the thresholds may be based on targets suggested by the internet service provider ISP of determined by the CPE or the overall diagnostic system more generally. The method may further comprise transmitting data in relation to the cluster to a network control component for identifying a candidate cause of the performance issue in respect of the streamed communication. The method may further comprise each CPE of the cluster transmitting its own data directly to the network control, or each CPE of the cluster transmitting its own data to the first CPE with the first CPE then transmitting the data from each CPE of the cluster to the network control. The transmitted data may include a DSL rating for the first CPE based on one or more of ES, SES, CRC, CV, FEC values collected by the first CPE, and may further include a DSL rating for each CPE in the cluster based on one or more of ES, SES, CRC, CV, FEC values collected by each CPE. Here, a DSL rating for a CPE may be based on an aggregated value of any one of ES, SES, CRC, CV, FEC values collected by the CPE during the streamed communication.

The monitoring process noted in the previous paragraph may comprise: identifying, by the CPE, the set of other CPEs; instructing, by the CPE, each of the other CPEs to determine whether there is a performance issue in respect of each other CPE's respective network connection; receiving, at the CPE, results of the determination from each of the other CPEs, the results being for defining the cluster of CPEs exhibiting performance issues in respect of their network connections. The identifying the set of other CPEs may comprise identifying other CPEs immediately neighbouring the CPE; determining whether the number of identified CPEs reaches a minimum number of other CPEs; if the number of identified CPEs reaches a minimum number of other CPEs, determining the number of identified CPEs to be the set of other CPEs; if the number of identified CPEs does not reach a minimum number of other CPEs, instructing each identified CPE to identify any further CPE that is immediately neighbouring to the identified CPE, wherein the identified CPEs and the further identified CPEs are included in the set of other CPEs. The additional CPEs may be identified until the minimum number of other CPEs is reached, each additional CPE being an immediate neighbour of a previously identified CPE.

According to a third aspect, a customer premise equipment, CPE, configured to perform methods according to the first aspect or the second aspect is provided.

According to a fourth aspect, a non-transitory computer readable medium having stored thereon a computer program that, when run on a customer premise equipment, CPE, according to the third aspect, causes the CPE to perform methods according to the first aspect of the second aspect.

### BRIEF DESCRIPTION OF THE DRAWINGS

The disclosure will be further described, by way of example only, with reference to the accompanying drawings, in which:
Figure 1 illustrates a network comprising a user device in connection to a network;
Figure 2 illustrates a network path through the network of Figure 1;
Figure 3 illustrates a network comprising an originator user device connected to a central server in turn connected to neighbouring user devices;
Figure 4 illustrates a network comprising an originator user device connected to neighbouring user devices;
Figure 5 illustrates a method according to aspects of the invention;
Figure 6 illustrates further steps of the method of figure 5;
Figure 7 illustrates further steps of the method of figure 6 according to a first embodiment of the invention; and
Figure 8 illustrates further steps of the method of figure 6 according to a second embodiment of the invention.

### DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

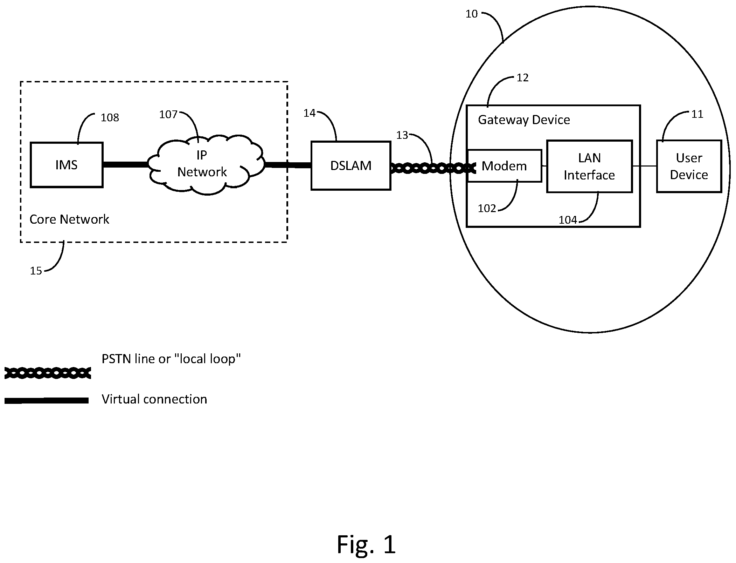

Figure 1 illustrates an exemplary network. The network (shown in Figure 1) is composed of several components. A customer Local Area Network or "LAN" 10 comprises a user device 11, here a VoIP handset. The user device 11 is connected to a first network connection that provides connection between the user device 11 in the LAN 10 and one or more remote entities outside the LAN. The network connection comprises a customer premise equipment, CPE, which is a digital subscriber line (DSL) gateway device 12, here a xDSL modem gateway within the LAN 10, and a DSL 13, here a PSTN line. The gateway device 12 connects to the DSL 13 which passes over a copper/aluminium access network to a DSLAM/MSAM 14 outside of the LAN 10 operated by the service provider. The DSLAM 14 provides connection to a core network 15 comprising an IP network 107 and an IP Multimedia Subsystem (IMS) 108. The customer network 10 hosts a Voice over IP client. The VoIP client may be running on one of the customer's connected devices - e.g. user device 11 - or may be incorporated into the gateway device 12 itself. In the provider network 15 the IP service carries the VoIP traffic between the customer's client device 11 and a third party client device via the underlying xDSL connection - e.g. DSL device 12 and DSL 13. Whilst DSL is described, alternative network connections may be used, such as fibre optic technology and the like.

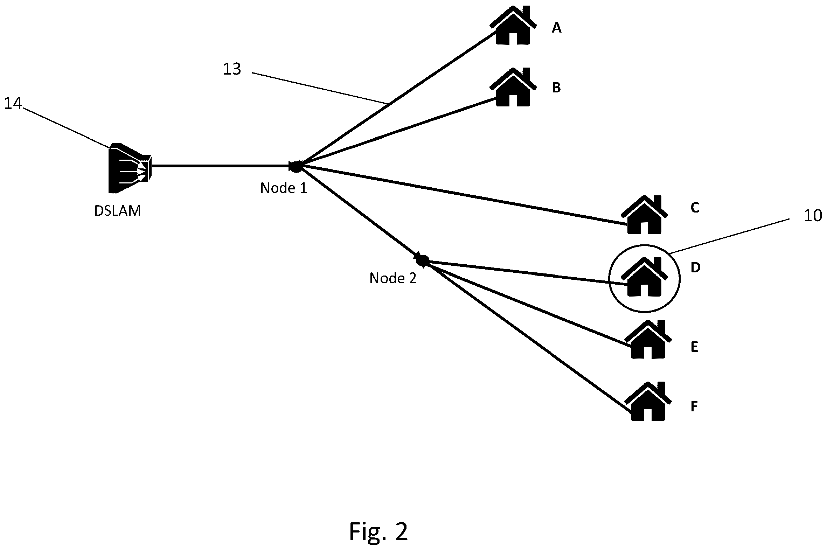

Figure 2 shows a number of customer premises, each served by a network having the components described in Figure 1. For example, house D comprises a LAN 10 having the same components as described in Figure 1, and a DSL network connection 13 connecting the house to the DSLAM 14. Each house shown has the same general set-up, although alternative set-ups may be provided as would be clear to those skilled in the art.

A cable containing a number of copper pairs runs from DSLAM to Node 1. Premises A, B and C are connected via distribution cables to Node 1. The main cable continues from Node 1 to Node 2 which provides a distribution point for connections to premises D, E and F. Premises A and B are in physical proximity to each other e.g. adjacent to each other along a road. Premises C-F are in physical proximity to each other but not to A and B. Thus, premises A, B and C are electrical neighbours (each being connected to node 1), and premises D, E and F are electrical neighbours (each being connected to node 2). Geographically however premises A and B are neighbours and premises C-F are neighbours. The pathway from the DSLAM 14 to a given house can be considered as a network connection - e.g. a DSL network connection 13 - between the DSLAM and the house. More specifically, it is a pathway from the DSLAM 14 to a CPE (e.g. CPE 12 of figure 1) within a LAN 10 that is considered a network connection between a CPE and a remote entity outside of the LAN. This network connection may comprise the DSL connection 13 of Figure 1. This provides one example. It would be clear to those skilled in the field that other connection set-ups, node points and distribution cables may be used as part of aspects of the present disclosure.

We now assume that premises D has detected a problem with VoIP call quality which has triggered DSL Diagnostic Monitoring. Here, the CPE of the premise D determines whether there is a performance issue in respect of streamed communication (the VoIP call) carried via a first network connection (DSL connection) between the CPE, which is in a local area network, LAN, of premise D and one or more remote entities outside the LAN. The determination is based on data from the streamed communication as discussed below. In response to determining that there is a performance issue in respect of the streamed communication carried via the first network connection, it is determined whether there is a performance issue in respect of the first network connection - e.g. the DSL connection 13 for premise D. This process will also generate a flag to indicate whether the DSL network is a likely cause. In response to determining that there is a performance issue in respect of the first network connection, a monitoring process is triggered for determining whether there is a performance issue in respect of other network connections connecting to a set of other CPE in respect of other LANs. In other words, premises D probes its neighbouring premises to discover if any of them have also experienced problems. The aim here is to define a cluster of CPEs exhibiting performance issues in respect of their network connections, the cluster being for identifying a candidate cause of the performance issue in respect of the streamed communication. Depending on the implementation, electrical and/or geographic neighbours may be probed. It is quite likely that VoIP sessions from neighbouring premises will not run at the same time and some premises may have no recent VoIP sessions. If an electrical neighbour, e.g. premises F has also logged a problem and both indicate a network issue, then they may be recorded as associates with an underlying network problem. If premises D has flagged a problem not indicated to be caused by a network issue and one or more neighbours has similarly flagged a non-network problem they may be recorded as associates with a probable platform issue. If premises D has flagged a VoIP call quality issue with a likely underlying network problem but no neighbours have had recent VoIP sessions, then a period of DSL Diagnostic Monitoring may be initiated on one or more neighbour circuits to check whether a network problem can be detected.

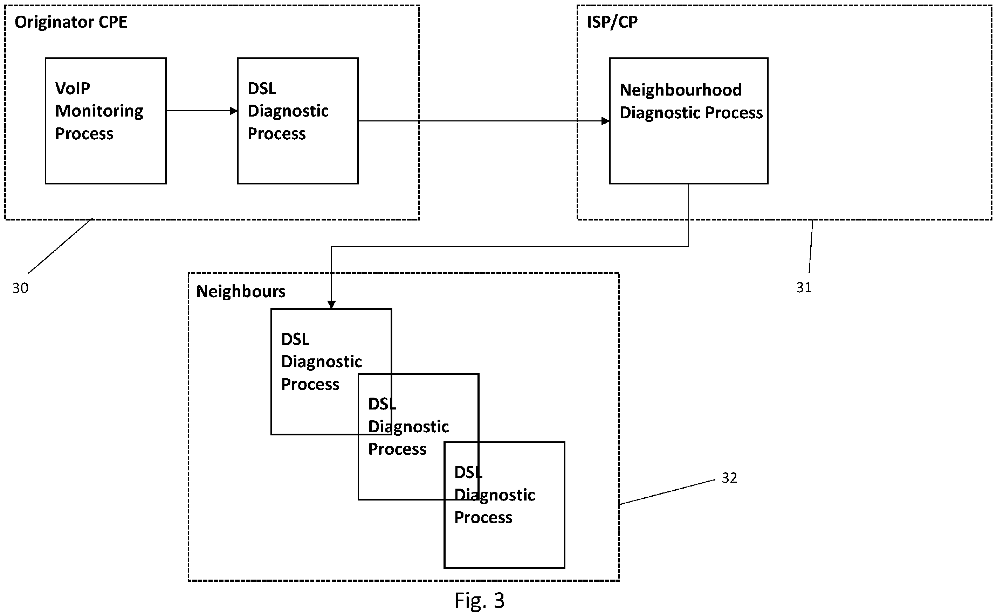

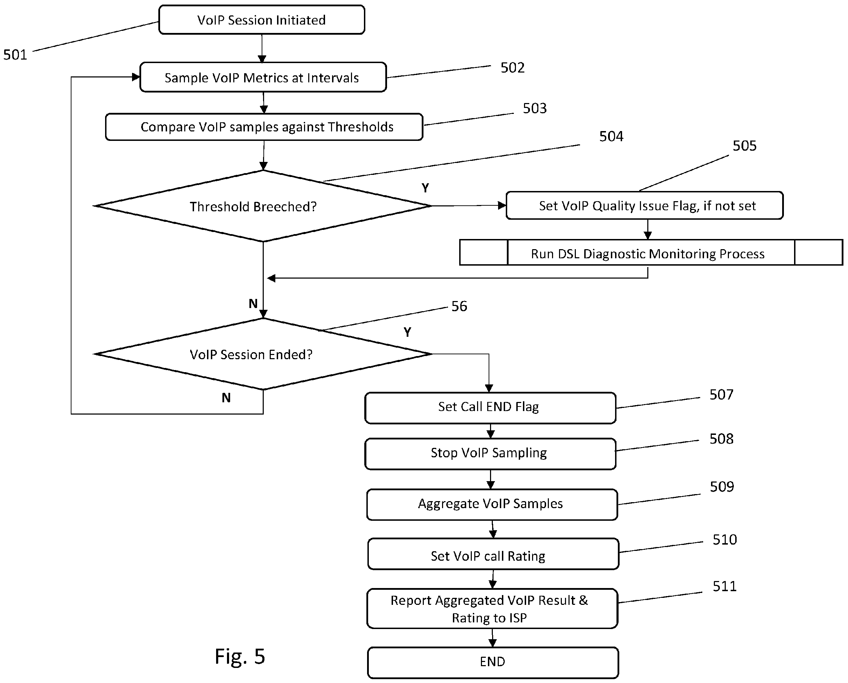

Figure 3 uses a centralised approach described in detail in relation to Figures 5, 6 and 7 whereby the original CPE 30, upon detecting a performance issue in VoIP and then in DSL, requests that the Internet Service Provider, ISP, 31 (sometimes referred to as the "Communications Provider or "CP", or "Control Centre") identify and contact known neighbours 32 to run DSL diagnostics. In the Figure, each "DSL Diagnostic Process" box indicates a separate neighbour 32. As discussed in relation to Figure 2, each neighbour represents a customer LAN 10 having the components discussed in relation to Figure 1.

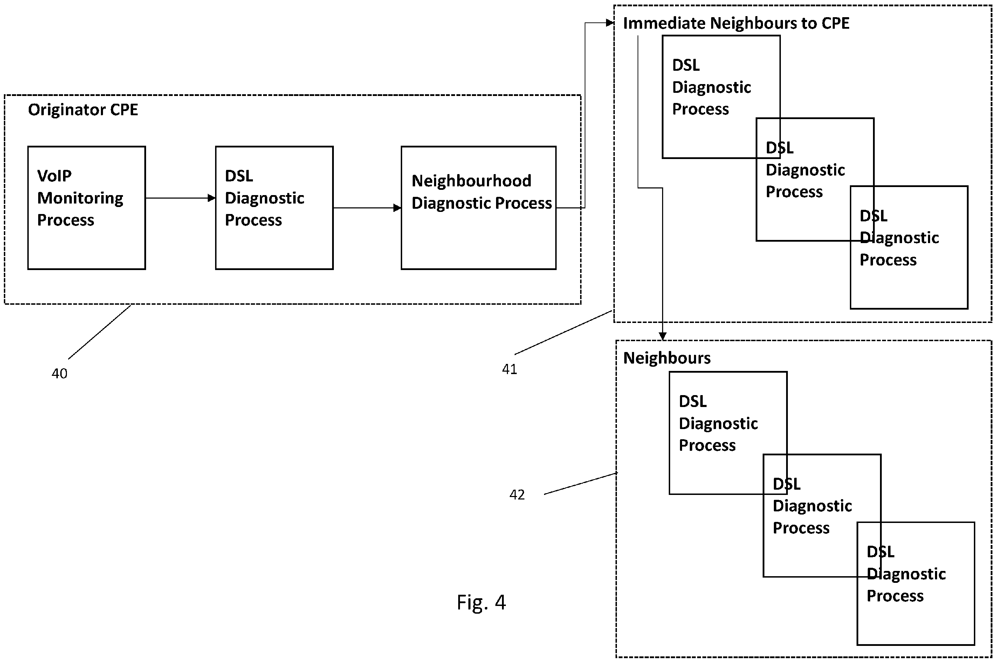

Figure 4 is a de-centralised approach described in detail in relation to Figures 5, 6 and 8 which is designed to be more autonomous and involves an original CPE 40 scanning for immediate neighbours 41 and if needs be, a recursive neighbours scanning for neighbours 42 method to ensure that a suitable cluster size is identified. Upon completion of identifying neighbours the original CPE requests that all neighbours run DSL Diagnostics and report back to the original CPE. In the Figure, each "DSL Diagnostic Process" box indicates a separate neighbour 41/42. As discussed in relation to Figure 2, each neighbour represents a customer LAN 10 having the components discussed in relation to Figure 1.

Figure 5 shows how the original CPE device determines whether there is a performance issue in respect of streamed communication carried via a first network connection between the CPE, which is in a local area network, LAN, and one or more remote entities outside the LAN, wherein the determination is based on data from the streamed communication. In more detail, the CPE monitors for performance issues in respect of VoIP and, if there is an issue, in respect of network connections, e.g. DSL connections. When a VoIP call commences at step 501, one or more parameters of the data from the streamed communication are monitored at step 502. In particular, key parameters at the VoIP client application, include packet loss (PL), jitter and MOS (Mean Opinion Score), with timestamp, are sampled and recorded in real-time at regular intervals e.g. per second throughout the call. It is then determined whether any one of the one or more parameters indicate a performance issue. Here, this is done by comparing the value of the parameter to a respective threshold at step 503, wherein, if the value meets its respective threshold, it is determined at step 504 that the value indicates a performance issue. There will be one or more threshold(s) which will define poor VoIP quality which will be stored on the client CPE device. Here, these threshold(s) will be pre-defined by the ISP and can be updated as required. The thresholds may be set based on pre-determined values that indicate acceptable performance. Alternatively, the thresholds may be based on targets suggested by the internet service provider ISP, or by a particular Standard. For example, ITU-T G.114 recommend that latency of 150ms one way should be the maximum value for a VoIP call. One way latency of >250ms will be noticeable to an end user. Cisco state that round trip delay should not exceed 300ms and one way jitter should be <30ms for VoIP. The VoIP codec used will vary the amount of packet loss that can be handled via packet loss concealment techniques. It would be ideal for packet loss to be 0%, however this is unrealistic and therefore its considered best to have <1% loss. A MOS <4 can indicate a poorer performing call. Of course it will be appreciated that any recommended threshold value may be updated/changed by the ISP based on the use case.

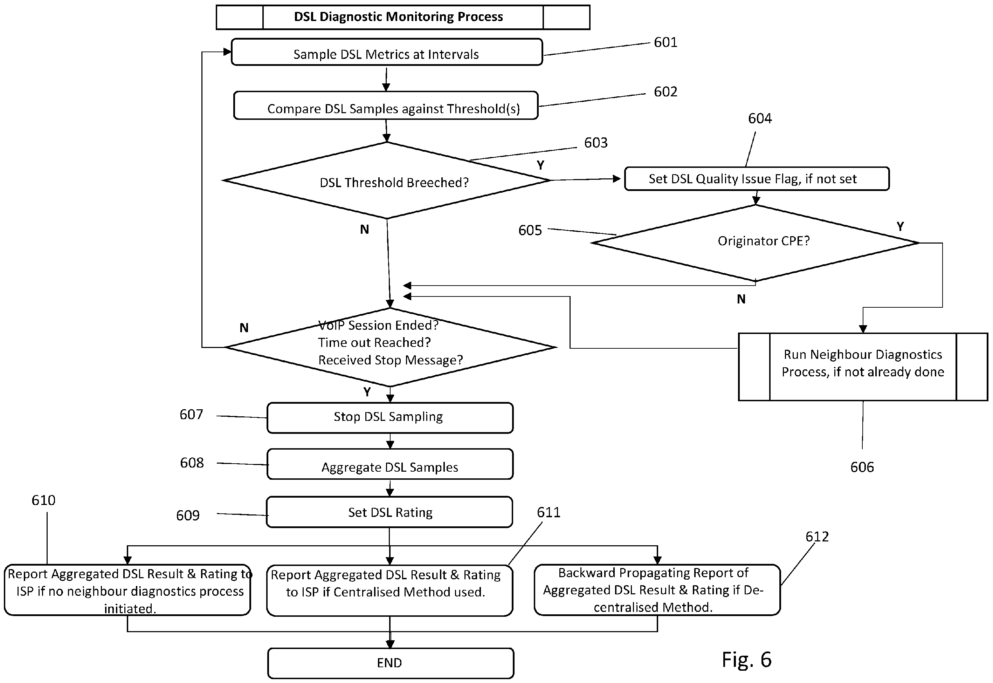

During the call the VoIP metrics for each recorded sample are compared with the threshold(s). If the comparison outcome of a sample is a quality breach then a check is performed to identify whether a VoIP Quality Flag has already been raised for this VoIP Session at step 505. If the flag has not been set then it is set, VoIP metrics continue to be sampled and the CPE device initiates DSL Diagnostic Monitoring Process (discussed below in relation to Figure 6) which assesses the underlying DSL network performance in parallel to the ongoing VoIP monitoring. In the event the VoIP quality flag had already been set then VoIP and DSL sampling continues until the VoIP session ends.

If the comparison outcome of a sample is not a quality breach - the parameter values staying within the threshold - a check is performed at step 506 as to whether the VoIP call has ended. If not, the VoIP sampling continues (i.e. steps 502 to 504 are repeated at intervals) throughout the session until the session ends. If so, steps 507 to 511 are performed, which are, respectively, set a Call End Flag, Stop VoIP sampling, aggregate the VoIP samples (e.g. PL, jitter and/or MOS values) , set VoIP call rating and report aggregated VoIP result and rating to ISP. Known methods of sample aggregation and call rating may be used as would be clear to the skilled person. The result of the sample aggregation and call rating is to present the ISP with data indicating that there is a performance issue, and data that allows the ISP to analyse what and where the root cause of the issue is - e.g. whether it is a DSL cluster issue affecting multiple CPEs, whether it is a DSL issue affecting only the original CPE, or whether it is not a DSL issue at all.

Referring to Figure 6, the method is shown by which a performance issue in respect of the first network connection is determined in response to determining - e.g. by performing steps shown in Figure 5 - that there is a performance issue in respect of the streamed communication carried via the first network connection. According to the present embodiment, a DSL Diagnostic Monitoring Process on the CPE is shown. First, the CPE will monitor one or more network performance parameters of the first network. In particular the CPE will, at step 601, sample DSL metrics in real-time at regular intervals, e.g. per second. Metrics that used to determine performance of the network connection (e.g. the performance of the DSL connection) may include one or more of Errored Seconds (ES), Severely Errored Seconds (SES), Cyclic Redundancy Check (CRC), Code Violations (CV), Forward Error Correction (FEC) among others.

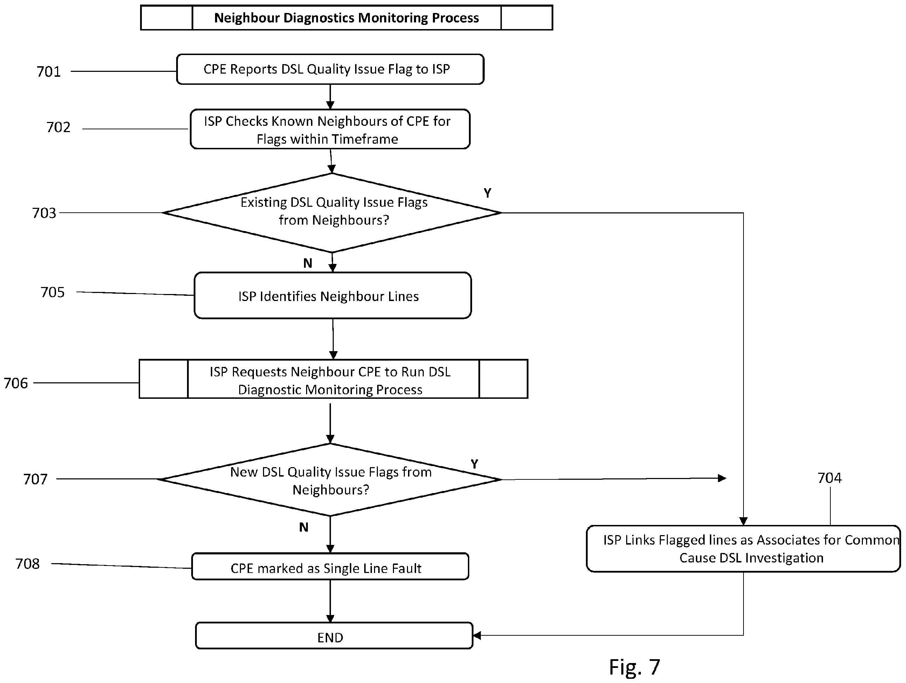

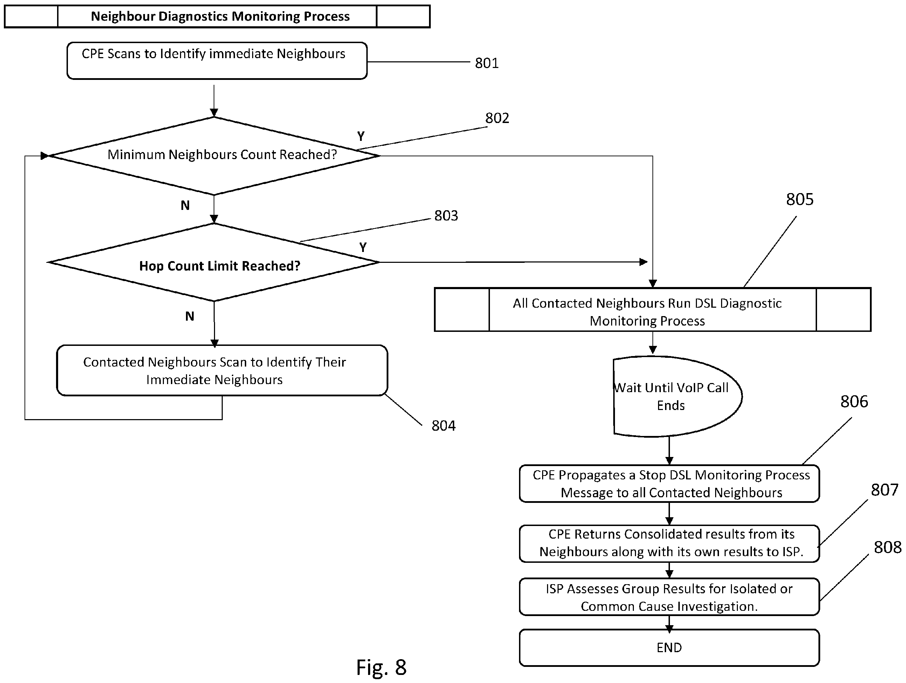

The method will then determine whether any one of the one or more network performance parameters indicate a performance issue by comparing the value of the network performance parameter to a respective threshold, wherein, if the value meets its respective threshold, the value indicates a performance issue, and from this it can be determined that there is performance issue in respect of the first network connection. This is performed at steps 602 and 603 of the method. Similar to the thresholds for the VoIP sampling, the threshold(s) will be pre-defined by the ISP and can be updated as required. The thresholds may be set based on pre-determined values that indicate acceptable performance. At step 602 an algorithm is used to analyse the sampled DSL metrics and compare them against DSL quality threshold(s) stored on the CPE. If the DSL quality threshold(s) are breached then, at step 603, it is determined that there is a performance issue and the Y branch is followed. Possible causes of performance issues are, among others, line errors caused by an intermittent physical connection, e.g. a copper line fault, and intermittent radio interference ingress into the DSL connection that can be exacerbated by a line imbalance, e.g., radio interference from an electrical source, like a faulty power supply. At step 604, a check may be performed to identify whether a DSL Quality Flag has already been raised for this VoIP Session. If the flag has already been set then it is determined at step 65 that the current CPE is not the originator CPE (i.e. this is the first detection of the performance issue by a CPE), and the N branch of step 605 is followed where DSL sampling continues until the VoIP session ends. If the flag has not been set and this is the original CPE then the Y branch of step 605 is followed and the CPE sets the flag and initiates the Neighbour Diagnostics Process at step 606. This process checks whether geographic or electrical neighbours of the original CPE are also experiencing a DSL performance problem in order to determine whether this is an isolated single line fault case or if there is a cluster of lines all of which are affected by a common cause condition. This could be achieved through a centralised (Figure 7) or a de-centralised (Figure 8) approach.

The one or more parameters of the streamed communication and/or the one or more network performance parameters continue to be monitored until the end of the streamed communication. At the end of the VoIP session, if the Neighbour Diagnostics Process was not implemented then the following steps occur:

The VoIP sampling will be stopped and the VoIP samples are aggregated to provide a VoIP call Rating. The CPE reports the aggregated data, the call rating and the quality issue flag value back to the ISP - these steps are the same as steps 507-511 discussed above in relation to Figure 5.

If the DSL Diagnostic Monitoring Process (Figure 6) had been initiated, the high resolution DSL monitoring stops, step 607 and the DSL samples (e.g. one or more of ES, SES, CRC, CV, FEC values) are aggregated to provide a DSL Rating. The method for reporting the DSL aggregated data and the DSL rating will depend on the use case as follows.

If the CPE is an original CPE then, if no VoIP flag is set the call is rated as acceptable. The reporting to the ISP follows steps 507 to 511 of Figure 5.

If the VoIP flag is set but no DSL flag is set then the result is a quality issue with VoIP but not caused by DSL. Here, the Y branch of step 504 of Figure 5, followed by the N branch of step 603 of Figure 6 are followed. The reporting of the DSL data to the ISP would follow step 607 to 610 alongside the reporting of the VoIP data. In particular, the DSL data is aggregated and a DSL rating is set (steps 608 and 609 respectively), and the aggregated DSL results and the rating are reported by the CPE to the ISP, step 610.

If both the VoIP and DSL flags are set then the result is a poor quality VoIP call likely caused by DSL. In this event, in order to determine if this is a single line fault or a common cause fault the neighbour results are required. Here, the Y branch of step 504 of Figure 5, the Y branch of step 603 of Figure 6 and the Y branch of step 605 of Figure 6 are followed. The reporting method here depends upon whether the centralised or de-centralised method was used to contact the neighbour. If a centralised approach is used, the reporting follows steps 607-609 and 611. If a de-centralised approach is used, the reporting follows steps 607-609 and 612. For both centralised and de-centralised approaches, DSL data is reported to the ISP alongside the VoIP data

If the CPE in question is not an originator CPE (it is a neighbour CPE), the Y branch of step 504 of Figure 5, the Y branch of step 603 of Figure 6 and the N branch of step 605 of Figure 6 are followed. As a neighbour CPE, the reporting method depends upon whether the centralised or de-centralised method was used to contact the neighbour.

### Centralised approach - first embodiment

An exemplary centralised approach according to a first embodiment of the invention is shown in Figure 7. Upon the original CPE having set the VoIP quality flag and setting the DSL flag for the first time during the on-going VoIP session, the Neighbour Diagnostic Monitoring Process is initiated. For example, this method commences from step 606 of Figure 6.

In the centralised approach, the original CPE, at step 701, flags to the central office that it has detected a VoIP service quality problem together with a DSL quality problem which indicates a network performance issue is the underlying cause. At step 702, the central office checks whether poor performance flags exist for geographic or electrical neighbours of the reporting line within a pre-defined timeframe.

If flag(s) exist then the reporting line (original CPE) is initially set as an associate of the existing flagged lines - this is the Y branch of step 703 followed by step 704. Whilst the VoIP session is ongoing its record stays open while VoIP and DSL samples continue to be collected. Once the VoIP session End flag is triggered the original CPEs VoIP and DSL sampling can be stopped and aggregation of the VoIP and DSL samples commence. For example, for the DSL samples, steps 607 - 609, and 611 of Figure 6 will be followed (stop DSL sampling, aggregate DSL samples, set DSL rating and report aggregated DSL samples and DSL rating to ISP).

The VoIP call rating and the DSL rating are both set to "Quality Issues", with the overall outcome of "VoIP quality issues likely due to DSL poor performance". The original CPE reports the aggregated results, ratings and outcome to the Central Office (e.g. as per Figure 6, so its record can be updated and closed). The Central Office, with the original CPE as an associate of existing flagged line(s) links the group together and requests a common cause investigation can be undertaken by an engineer.

If there are no existing flags found within a pre-defined timeframe (this is the first CPE reporting a fault), the Central Office will complete a look up of neighbours for the original CPE - i.e. the ISP identifies neighbour lines - at step 705. At step 706, the ISP contacts the neighbours and requests that the DSL Monitoring Process be initiated at each neighbour. Upon completion of the original CPEs VoIP session, which is indicated by its reporting of VoIP and DSL data, the Central Office then requests all neighbours to stop the DSL Monitoring Process and report back. Each neighbour stops DSL sampling, aggregates results, sets a DSL rating and reports this directly back to Central Office. The Central Office performs an analysis of all results. This is performed at step 707 of Figure 7. If no neighbours reported a DSL Quality Issue then original CPE is marked as a Single Line Fault - step 708. Any Neighbours that also reported a DSL Quality Issue will be linked as associates of Original CPE and marked for common cause investigation by an engineer.

### Decentralised approach - second embodiment

An exemplary decentralised approach according to a second embodiment of the invention is shown in Figure 8. Upon the original CPE having set the VoIP quality flag and setting the DSL flag for the first time during the on-going VoIP session, the Neighbour Diagnostic Monitoring Process is initiated. For example, this method commences from step 606 of Figure 6.

In the decentralised approach the original CPE performs a monitoring process for determining whether there is a performance issue in respect of other network connections connecting to a set of other CPEs, in respective other LANs, so as to define a cluster of CPEs exhibiting performance issues in respect of their network connections, the cluster being for identifying a candidate cause of the performance issue in respect of the streamed communication. The monitoring process commences by identifying, by the CPE, the set of other CPEs. In particular, at step 801 the CPE scans for immediate neighbours e.g. using its Wi-Fi capabilities. This may be achieved by the CPE using Wi-Fi to scan for SSIDs matching its own ISP. In the event that no matching SSIDs are identified the CPE can revert to the centralised model and request the ISP contact neighbours instead. At step 802, it may be determined whether the number of identified CPEs reaches a minimum number of other CPEs. If the number of immediate found neighbours does not meet a minimum required neighbour count - i.e. a minimum number of other CPEs - then each identified CPE is instructed to identify any further CPE that is immediately neighbouring to the identified CPE. In other words, immediate neighbours are requested to scan for their neighbours. This is the N branch of step 802. The identified CPEs and the further identified CPEs are included in the set of other CPEs. This recursive process stops once the minimum neighbour count is reached or a maximum hop limit is reached - determined by the loop at steps 802 N branch, 803 N branch and 804. The hop count limit defines the maximum number of CPEs that can be contacted away from the original CPE. For example, the contacting of an immediate neighbour of the original CPE may be considered a first "hop" away from the original CPE. If the immediate neighbour then contacts a CPE that is immediately neighbouring it, this is a second hop. If that second tier CPE then contacts a further CPE that is a third hop, and so on. The hop limit may for example limit the number of hops away from the original CPE to two, or three. Each neighbour contacted will record which CPE contacted them and which CPEs they contacted to ensure no CPE is asked more than once. Once the recursive process stops, each of the other CPEs are instructed - at step 805 - to determine whether there is a performance issue in respect of each other CPE's respective network connection. Here, a request is sent to all known neighbours to initiate the DSL Monitoring Process, such as the process shown in Figure 6. Neighbours will continue running this process until contacted to stop or a timeout value is reached.

Upon completion of the original CPE VoIP Session, the CPE will propagate out a Stop DSL Monitoring Process message - step 806. Every contacted neighbour will stop DSL sampling, aggregate the samples and set a DSL rating. Each neighbour will backwards propagate their results, following the same route the original request followed, until all results are received by the original CPE. In other words, the original CPE receives the results of the determination from each of the other CPEs, the results being for defining the cluster of CPEs exhibiting performance issues in respect of their network connections. At step 807, the original CPE will bundle all the neighbour results together along with its own and send to the Central Office. For example, the CPE will follow steps 607-609 and 612 (stop DSL sampling at step 607, aggregate DSL samples at step 608, set DSL rating at step 609, and then backward propagate its results along with all the neighbour results to the Central Office (i.e. the ISP) at step 612. The Central Office will analyse all results at step 808. If the original CPE was the only one to report a DSL Quality issue then it is marked as a single line fault. Any neighbours who also reported a DSL Quality Issue are linked as associates to original CPE and marked for common cause investigation by an engineer.

The methods described above provide two example implementations (centralised and decentralised). It will be appreciated that certain steps may not be necessary depending on the use case. For example, some implementations may not require the signalling of flags - such as steps 505 and/or 604.

It is also noted that the decentralised approach may be implemented independently of performance issue detection at the VoIP level. Such an approach may, for example, be implemented by simply commencing the method at step 601 and then following the steps as described in relation to Figure 6 and Figure 7 or Figure 8. In other words, the DSL is directly monitored by the CPE - there is no monitoring of VoIP communication. More generally, such an approach may be as follows:

A method for monitoring a network, the method comprising: determining whether there is a performance issue in respect of the first network connection; and in response to determining that there is a performance issue in respect of the first network connection, triggering a monitoring process to determine whether there is a performance issue in respect of other network connections connecting to a set of other CPEs, in respective other LANs, so as to define a cluster of CPEs exhibiting performance issues in respect of their network connections, the cluster being for identifying a candidate cause of the performance issue in respect of the streamed communication. Determining whether there is a performance issue in respect of the first network connection may comprise monitoring one or more network performance parameters of the first network; and determining whether any one of the one or more network performance parameters indicate a performance issue. Determining whether a network performance parameter indicates a performance issue may comprise comparing the value of the network performance parameter to a respective threshold, wherein, if the value meets its respective threshold, the value indicates a performance issue.

In a de-centralised approach such as that of figure 8, the monitoring process noted in the previous paragraph may comprise: identifying, by the CPE, the set of other CPEs; instructing, by the CPE, each of the other CPEs to determine whether there is a performance issue in respect of each other CPE's respective network connection; receiving, at the CPE, results of the determination from each of the other CPEs, the results being for defining the cluster of CPEs exhibiting performance issues in respect of their network connections. The identifying the set of other CPEs may comprise identifying other CPEs immediately neighbouring the CPE; determining whether the number of identified CPEs reaches a minimum number of other CPEs; if the number of identified CPEs reaches a minimum number of other CPEs, determining the number of identified CPEs to be the set of other CPEs; if the number of identified CPEs does not reach a minimum number of other CPEs, instructing each identified CPE to identify any further CPE that is immediately neighbouring to the identified CPE, wherein the identified CPEs and the further identified CPEs are included in the set of other CPEs. The additional CPEs may be identified until the minimum number of other CPEs is reached, each additional CPE being an immediate neighbour of a previously identified CPE.

It will be appreciated that any of the example network requirements described above may be combined with any of the other network path requirements.

It will also be appreciated that a "node", as discussed herein, may be any physical or virtual device that can receive a message from a network and send a message to another node on the network, such as a router. In particular, they may be devices that operate in layer 2 or layer 3 of the Open Systems Interconnection (OSI) model, also known as the data link layer and network layer respectively. For example, the transactions could be implemented in a modification of the Layer 2 Tunnelling Protocol (L2TP) of the Internet protocol suit (TCP/IP) or of the Internet Protocol Security (IPsec) protocol suit which operates in OSI layer 3. IPsec allows route-based VPNs, ensuring that routes pass through certain interfaces based on destination address.

It will be understood by those skilled in the art that the apparatus that embodies the invention could be a general purpose device (or group of devices) having software arranged to provide an embodiment of the invention. Furthermore, any or all of the software used to implement the invention can be contained on various storage mediums such as a floppy disc, CD-ROM, or magnetic tape so that the program(s) can be loaded onto one or more general purpose devices, or could be downloaded over a network.

The invention may be defined by the following clauses:
1. A method for monitoring a network, the method comprising:
   determining whether there is a performance issue in respect of streamed communication carried via a first network connection between a first customer premise equipment, CPE, in a local area network, LAN, and one or more remote entities outside the LAN, wherein the determination is based on data from the streamed communication;
   in response to determining that there is a performance issue in respect of the streamed communication carried via the first network connection, determining whether there is a performance issue in respect of the first network connection; and
   in response to determining that there is a performance issue in respect of the first network connection, triggering a monitoring process to determine whether there is a performance issue in respect of other network connections connecting to a set of other CPEs, in respective other LANs, so as to define a cluster of CPEs exhibiting performance issues in respect of their network connections, the cluster being for identifying a candidate cause of the performance issue in respect of the streamed communication.
2. The method of clause 1, wherein determining whether there is a performance issue in respect of the streamed communication comprises monitoring one or more parameters of the data from the streamed communication; and determining whether any one of the one or more parameters indicate a performance issue.
3. The method of clause 2, wherein determining whether a parameter of the one or more parameters of the data from the streamed communication indicates a performance issue comprises comparing the value of the parameter to a respective threshold, wherein, if the value meets its respective threshold, the value indicates a performance issue.
4. The method of clause 2 or 3, wherein the one or more parameters comprise one or more of a packet loss, a jitter value and a Mean Opinion Score.
5. The method of any preceding clause, wherein determining whether there is a performance issue in respect of the first network connection comprises monitoring one or more network performance parameters of the first network; and determining whether any one of the one or more network performance parameters indicate a performance issue
6. The method of clause 5, wherein determining whether a network performance parameter indicates a performance issue comprises comparing the value of the network performance parameter to a respective threshold, wherein, if the value meets its respective threshold, the value indicates a performance issue.
7. The method of any preceding clause, further comprising transmitting data in relation to the cluster to a network control component for identifying a candidate cause of the performance issue in respect of the streamed communication.
8. The method of any preceding clause, wherein the monitoring process comprises:
   identifying, by the CPE, the set of other CPEs;
   instructing, by the CPE, each of the other CPEs to determine whether there is a performance issue in respect of each other CPE's respective network connection;
   receiving, at the CPE, results of the determination from each of the other CPEs, the results being for defining the cluster of CPEs exhibiting performance issues in respect of their network connections.
9. The method of clause 8, wherein identifying the set of other CPEs comprises:
   identifying other CPEs immediately neighbouring the CPE;
   determining whether the number of identified CPEs reaches a minimum number of other CPEs;
   if the number of identified CPEs reaches a minimum number of other CPEs, determining the number of identified CPEs to be the set of other CPEs;
   if the number of identified CPEs does not reach a minimum number of other CPEs, instructing each identified CPE to identify any further CPE that is immediately neighbouring to the identified CPE, wherein the identified CPEs and the further identified CPEs are included in the set of other CPEs.
10. The method of clause 9, wherein additional CPEs are identified until the minimum number of other CPEs is reached, each additional CPE being an immediate neighbour of a previously identified CPE.
11. The method of any preceding clause, wherein the streamed communication is a Voice over IP session, and/or wherein the first network connection is a Digital Subscriber Line and/or the other network connections are Digital Subscriber Lines.
12. A method for monitoring a network, the method comprising:
   determining whether there is a performance issue in respect of the first network connection; and
   in response to determining that there is a performance issue in respect of the first network connection, triggering a monitoring process to determine whether there is a performance issue in respect of other network connections connecting to a set of other CPEs, in respective other LANs, so as to define a cluster of CPEs exhibiting performance issues in respect of their network connections, the cluster being for identifying a candidate cause of the performance issue in respect of the first network connection;
   wherein the monitoring process comprises:
      identifying, by the CPE, the set of other CPEs;
      instructing, by the CPE, each of the other CPEs to determine whether there is a performance issue in respect of each other CPE's respective network connection;
   receiving, at the CPE, results of the determination from each of the other CPEs, the results being for defining the cluster of CPEs exhibiting performance issues in respect of their network connections.
13. A customer premise equipment, CPE, configured to perform the method of any of clauses 1 to 12.
14. A non-transitory computer readable medium having stored thereon a computer program that, when run on a customer premise equipment, CPE, according to claim 13, causes the node to perform the method of any of clauses 1 to 12.

## Claims

1. A method for monitoring a network, the method comprising:
determining whether there is a performance issue in respect of streamed communication carried via a first network connection between a first customer premise equipment, CPE, in a local area network, LAN, and one or more remote entities outside the LAN, wherein the determination is based on data from the streamed communication;
in response to determining that there is a performance issue in respect of the streamed communication carried via the first network connection, determining whether there is a performance issue in respect of the first network connection; and
in response to determining that there is a performance issue in respect of the first network connection, triggering a monitoring process to determine whether there is a performance issue in respect of other network connections connecting to a set of other CPEs, in respective other LANs, so as to define a cluster of CPEs exhibiting performance issues in respect of their network connections, the cluster being for identifying a candidate cause of the performance issue in respect of the streamed communication,
wherein the monitoring process comprises:
identifying, by the CPE, the set of other CPEs;
instructing, by the CPE, each of the other CPEs to determine whether there is a performance issue in respect of each other CPE's respective network connection;
receiving, at the CPE, results of the determination from each of the other CPEs, the results being for defining the cluster of CPEs exhibiting performance issues in respect of their network connections.

2. The method of claim 1, wherein determining whether there is a performance issue in respect of the streamed communication comprises monitoring one or more parameters of the data from the streamed communication; and determining whether any one of the one or more parameters indicate a performance issue.

3. The method of claim 2, wherein determining whether a parameter of the one or more parameters of the data from the streamed communication indicates a performance issue comprises comparing the value of the parameter to a respective threshold, wherein, if the value meets its respective threshold, the value indicates a performance issue.

4. The method of claim 2 or 3, wherein the one or more parameters comprise one or more of a packet loss, a jitter value and a Mean Opinion Score.

5. The method of any preceding claim, wherein determining whether there is a performance issue in respect of the first network connection comprises monitoring one or more network performance parameters of the first network; and determining whether any one of the one or more network performance parameters indicate a performance issue

6. The method of claim 5, wherein determining whether a network performance parameter indicates a performance issue comprises comparing the value of the network performance parameter to a respective threshold, wherein, if the value meets its respective threshold, the value indicates a performance issue.

7. The method of any preceding claim, further comprising transmitting data in relation to the cluster to a network control component for identifying a candidate cause of the performance issue in respect of the streamed communication..

8. The method of any preceding claim, wherein identifying the set of other CPEs comprises:
identifying other CPEs immediately neighbouring the CPE;
determining whether the number of identified CPEs reaches a minimum number of other CPEs;
if the number of identified CPEs reaches a minimum number of other CPEs, determining the number of identified CPEs to be the set of other CPEs;
if the number of identified CPEs does not reach a minimum number of other CPEs, instructing each identified CPE to identify any further CPE that is immediately neighbouring to the identified CPE, wherein the identified CPEs and the further identified CPEs are included in the set of other CPEs.

9. The method of claim 8, wherein additional CPEs are identified until the minimum number of other CPEs is reached, each additional CPE being an immediate neighbour of a previously identified CPE.

10. The method of any preceding claim, wherein the streamed communication is a Voice over IP session, and/or wherein the first network connection is a Digital Subscriber Line and/or the other network connections are Digital Subscriber Lines.

11. A method for monitoring a network, the method comprising:
determining whether there is a performance issue in respect of the first network connection; and
in response to determining that there is a performance issue in respect of the first network connection, triggering a monitoring process to determine whether there is a performance issue in respect of other network connections connecting to a set of other CPEs, in respective other LANs, so as to define a cluster of CPEs exhibiting performance issues in respect of their network connections, the cluster being for identifying a candidate cause of the performance issue in respect of the first network connection;
wherein the monitoring process comprises:
identifying, by the CPE, the set of other CPEs;
instructing, by the CPE, each of the other CPEs to determine whether there is a performance issue in respect of each other CPE's respective network connection;
receiving, at the CPE, results of the determination from each of the other CPEs, the results being for defining the cluster of CPEs exhibiting performance issues in respect of their network connections.

12. A customer premise equipment, CPE, configured to perform the method of any of claims 1 to 11.

13. A non-transitory computer readable medium having stored thereon a computer program that, when run on a customer premise equipment, CPE, according to claim 12 causes the node to perform the method of any of claims 1 to 11.
